Europäisches Patentamt

(19) European Patent Office

Office européen des brevets

(11) **EP 0 768 686 A2**

(12) **EUROPEAN PATENT APPLICATION**

(43) Date of publication:
16.04.1997 Bulletin 1997/16

(51) Int. Cl.$^6$: **H01G 9/12**

(21) Application number: 96115481.2

(22) Date of filing: 26.09.1996

(84) Designated Contracting States:
DE GB

(30) Priority: 28.09.1995 JP 251557/95

(71) Applicant: **NEC CORPORATION**
**Tokyo (JP)**

(72) Inventors:
• **Taniguchi, Hiromichi**
**Minato-ku, Tokyo (JP)**

• **Nishiyama, Toshihiko**
**Minato-ku, Tokyo (JP)**
• **Fukaumi, Takashi**
**Minato-ku, Tokyo (JP)**
• **Kobayashi, Atsushi**
**Minato-ku, Tokyo (JP)**

(74) Representative: **Glawe, Delfs, Moll & Partner**
**Patentanwälte**
**Postfach 26 01 62**
**80058 München (DE)**

(54) **Solid electrolytic capacitor and fabrication method thereof**

(57) A solid electrolytic capacitor using an electrically conductive polymer compound as a solid electrolyte is provided, in which the time-dependent ESR increase can be prevented even when operating at a high temperature circumstance. This solid electrolytic capacitor includes an anode body, an anode lead implanted onto the top face of the body, a dielectric layer made of an oxide of the metal and formed on the anode body, a solid electrolyte layer made of an electrically conductive polymer compound and formed on the dielectric layer, and a cathode layer formed on the solid electrolyte layer. The solid electrolyte layer has a non-contacted area with the cathode layer near the bottom of the anode lead. This non-contacted area is covered with an electrically insulating resin layer having a function of preventing oxygen molecules existing in the atmosphere from entering the solid electrolyte layer. As the electrically conductive polymer compound, polypyrrole, polythiophene, polyaniline or the like is preferably employed. An epoxy resin, a fluoro resin or acrylic resin is preferably used for the electrically insulating resin layer.

FIG.3

**Description**

BACKGROUND OF THE INVENTION

1. Field of the Invention

The present invention relates to a solid electrolytic capacitor and more particularly, to a solid electrolytic capacitor including a layer of an electrically conductive polymer compound as a solid electrolyte layer, and a fabrication method of the capacitor.

2. Description of the Prior Art

To respond to the recent trend towards the use of high frequency signals in electronic circuits, a solid electrolytic capacitor including an electrically conductive polymer compound as its solid electrolyte has been proposed. The reason is as follows:

An electrically conductive polymer compound typically has an electric conductivity of about 10 S/cm, which is approximately a hundred times as much as that of manganese dioxide ($MnO_2$) conventionally used in general. As a result, if this compound is used as a solid electrolyte, such a solid electrolytic capacitor can be provided that is low in Equivalent Series Resistance (ESR) and is consequently low in impedance of a high frequency range. This means that this capacitor has a superior electric property or performance in the high frequency range.

An example of the capacitors of this sort is disclosed in the Japanese Non-Examined Patent Publication No. 4-56445 published in 1992.

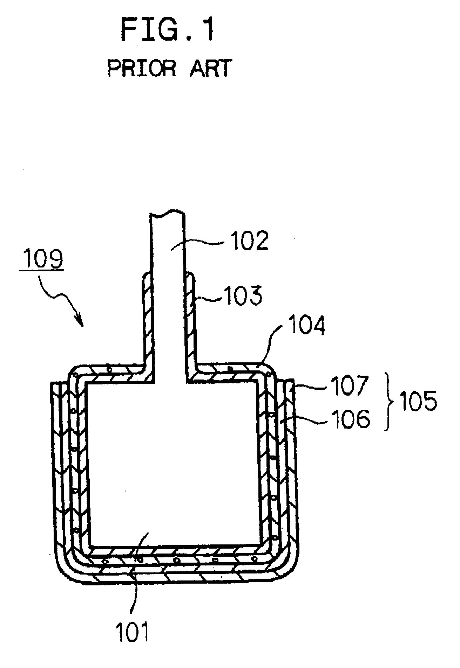

Fig.1 shows a cross-sectional view of a capacitor element of a conventional tantalum solid-electrolyte capacitor of this sort.

In Fig. 1, a capacitor element 109 is comprised of an anode body 101 made of tantalum (Ta) which is one of valve action metals, and an anode lead 102 made of a piece of a tantalum wire. The anode body 101 usually has a columnar or prismatic shape and an enlarged surface area. The anode lead 102 is implanted onto the top face of the anode body 101 to extend along the longitudinal axis of the body 101.

Instead of tantalum, any other metal having a valve action such as aluminum (Al), titanium (Ti), or the like may be used as the material for the anode body 101.

The capacitor element 109 further includes a dielectric layer 103 made of tantalum oxide ($Ta_2O_5$) which is an oxide of the valve metal, a solid electrolyte layer 104 made of a polypyrrole which is one of the electrically conductive polymer compounds, and a cathode layer 105 with a two-level structure made of a graphite sublayer 106 and a silver (Ag) sublayer 107.

The dielectric layer 103 is forced on the surface of the anode body 101 to cover the bottom, side and top faces of the body 101. The layer 103 covers the surface of the bottom part of the anode lead 102 also.

The solid electrolyte layer 104 is formed on the dielectric layer 103 to cover the bottom, side and top faces of the anode body 101. The layer 104 does not cover the anode wire 102.

Any one of the electrically-conductive polymer compounds other than polypyrrole (for example, polythiophene, polyaniline or the like) stay be employed for the solid electrolyte layer 104.

The graphite sublayer 106 forming the inner portion of the cathode layer 105 is formed on the solid electrolyte layer 104 to cover the bottom and side faces of the anode body 101. The layer 106 does not cover the top face of the anode body 101 nor the anode lead 102.

The silver sublayer 107 forming the outer portion of the cathode layer 105 is formed on the graphite sublayer 106 to cover the bottom and side faces of the anode body 101. The layer 107 also does not cover the top face of the anode body 101 nor the anode wire 102.

The two sublayers 106 and 107 are completely overlapped with each other, thereby forming the cathode layer 105.

An external anode terminal (not shown) is connected to the top of the anode lead 102 and an external cathode terminal (not shown) is connected to the cathode layer 105.

The capacitor element 109 is encapsulated by a molding epoxy resin to form an approximately parallelepiped package (not shown). The bottom of the external anode and cathode terminals are buried in the package, and the remaining external anode and cathode leads are projected from the package.

The conventional solid electrolyte capacitor shown in Fig.1 is fabricated as described below.

First, a powder of tantalum is pressed to have a specific columnar or prismatic shape. During this pressing process, a tantalum wire serving as the anode lead 102 is implanted onto the top face of the pressed powder to extend along the longitudinal axis of the columnar or prismatic shape. The shaped powder is then sintered, resulting in the surface-enlarged anode body 101.

Next, the anode body 101 is subjected to an anodic oxidation process, thereby forming a layer of an anodic oxide of the valve action metal, i.e., tantalum oxide ($Ta_2O_5$), which serves as the dielectric layer 103. The dielectric layer 103 is formed on the surface of the anode body 101 to cover the bottom, side and top faces of the body 101 and the surface of the bottom part of the anode lead 102.

Thereafter, as the solid electrolytic layer 104, a polypyrrole layer is formed on the dielectric layer 103 to cover the bottom, side and top faces of the anode body 101, and not to cover the anode wire 102.

Then, the graphite sublayer 106 is formed on the solid electrolytic layer 104 by coating a graphite paste or the like, thereby covering the bottom and side faces of the anode body 101 and exposing the top face of the anode body 101 and the anode lead 102. The graphite paste is obtained, for example, by mixing graphite particles with a binder of a resin such as an epoxy resin.

The graphite sublayer 106 of the cathode layer 105 may be formed by the following way that the anode body 101 having already formed the polypyrrole layer 104 is immersed into a liquid suspension and then, is heated and dried. The liquid suspension may be obtained by suspending graphite particles into water by means of agitation.

Subsequently, the silver sublayer 107 of the cathode layer 105 is formed on the graphite sublayer 106 by coating a silver paste or the like to be completely overlapped with the underlying graphite sublayer 106. The silver paste may be obtained by a similar way to that of the above graphite paste.

Further, to electrically interconnect the conventional capacitor with external circuits (not shown), the external anode terminal (not shown) is welded to the anode lead 102 and the external cathode terminal (not shown) is secured onto the surface of the cathode layer 105 by applying an electrically conductive adhesive or the like. Thus, the capacitor element 109 is finished.

Finally, the capacitor element 109 thus finished is encapsulated by a resin package (not shown) by a transfer-molding or dipping process. Alternately, the element 109 is encased into a metallic casing.

Thus, the conventional solid electrolytic capacitor is obtained.

In the capacitor element 109 of the conventional solid electrolytic capacitor shown in Fig.1, as described above, the cathode layer 105 is formed not to cover the underlying polypyrrole layer 104 over the top face of the anode body 101. In other words, the cathode layer 105 is formed to expose the polypyrrole layer 104 in the neighborhood of the bottom or root of the anode lead 102.

This is because if the electrically conductive particles such as graphite or silver particles contained in the cathode layer 105 are contacted with the tantalum oxide layer 103, the leakage current characteristics of the capacitor will be extremely degraded. In other words, it is necessarily avoided that the cathode layer 105 is formed to extend beyond the polypyrrole layer 104 toward the anode lead 102 and is consequently contacted with the tantalum oxide layer 103.

Although the cathode layer 105 entirely covers the bottom and side faces of the anode body 101 in Fig. 1, the cathode layer 105 may be formed to partially expose the polypyrrole layer 104 in the upper part of the side face of the body 101 in addition to the top face of the body 101.

With the conventional solid electrolytic capacitor shown in Fig. 1, as described above, due to the use of the electrically conductive polymer compound for the solid electrolyte layer 104, the electric conductivity of the solid electrolyte layer 104 can be increased up to approximately a hundred times as much as that of manganese dioxide, thereby decreasing the value of ESR. As a result, it is possible to provide a superior frequency characteristic capable of responding to the recent trend towards the use of high frequency signals.

However, the inventors found a problem in the above conventional capacitor in Fig. 1 that the value of ESR increases non-reciprocally with time, and that the ESR increase becomes remarkably if operating at a high temperature circumstance.

SUMMARY OF THE INVENTION

Accordingly, an object of the present invention is to provide a solid electrolytic capacitor using an electrically conductive polymer compound as a solid electrolyte in which the time-dependent ESR increase can be prevented even when operating at a high temperature circumstance, and a fabrication method of the capacitor.

According to a first aspect of the present invention, a solid electrolytic capacitor is provided. This capacitor includes an anode body made of a metal having a valve action, an anode lead implanted onto the top face of the anode body, a dielectric layer which is made of an oxide of the metal and is formed on the anode body, a solid electrolyte layer which is made of an electrically conductive polymer compound and is formed on the dielectric layer, and a cathode layer formed on the solid electrolyte layer.

The solid electrolyte layer has a non-contacted area with the cathode layer near the bottom of the anode lead. This area is covered with an electrically insulating resin layer having a function of preventing oxygen molecules existing in the atmosphere from entering the solid electrolyte layer.

The electrically insulating resin layer may be made of any one of the electrically insulating resins, if it has a function of preventing oxygen molecules existing in the atmosphere from entering the solid electrolyte layer. For example, an epoxy resin, a fluoro resin or acrylic resin is preferably used. The electrically insulating resin layer may be formed by a dispensing process or the like.

As the electrically conductive polymer compound, any one of the electrically conductive polymer compounds may be used. However, it is preferred that polypyrrole, polythiophene or polyaniline is employed.

The inventors found the following facts about the conventional solid electrolyte capacitor using the electrically conductive polymer compound as the solid electrolytic:

(a) The time-dependent ESR increase of the capacitor is caused by oxidation of the electrically-conductive polymer compound layer. This oxidation process is due to the oxygen molecules contained in the atmosphere.

(b) The oxygen molecules serving as the cause of the oxidation are penetrated into the electrically conductive polymer compound layer mainly through the exposed area of the electrically conductive polymer compound layer from the cathode layer. In other words, the main entering path of the oxygen molecules is located at the non-contacted area of the electrically conductive polymer compound layer with the cathode layer.

The present invention was created based on the above facts.

With the solid electrolytic capacitor according to the first aspect of the present invention, the electrically insulating resin layer having a function of preventing the oxygen molecules existing in the atmosphere from entering the solid electrolyte layer is formed to cover the non-contacted area of the electrically conductive polymer compound layer. Therefore, the oxygen molecules in the atmosphere are prevented from entering the electrically conductive polymer compound layer by the insulating resin layer.

As a result, the oxidation of the electrically conductive polymer compound layer can be prevented. This means that the time-dependent ESR increase is effectively suppressed even when the capacitor is operated at a high temperature circumstance.

In a preferred embodiment of the capacitor, the electrically insulating resin layer for preventing the penetration of the oxygen molecules is formed to be overlapped with the cathode layer. An additional advantage of the increased ability to prevent the penetration of the oxygen molecules arises, because the penetration or entering path length of the oxygen molecules becomes longer.

The cathode layer may be extended toward the anode lead to cover the electrically insulating resin layer over the top and side faces of the anode body or over only the side face of the body.

The electrically insulating resin layer may be formed to cover the top part of the cathode layer.

It is preferred that the height or width of the overlap portion of the electrically insulating resin layer and the cathode layer is equal to or greater than 0.1 mm. If the height or width of the overlap portion is less than 0.1 mm, a wanted capacitance value cannot be obtained whale obtaining the effect of preventing the ESR increase.

It is preferred that the surface area of the overlapped portion is equal to or less than 25% of the entire surface area of the anode body excepting the anode lead. If the surface area of the overlap portion is greater than 25% of the entire surface area of the anode body excepting the anode lead, a wanted capacitance value cannot be obtained while obtaining the effect of preventing the ESR increase.

In another preferred embodiment of the capacitor, the cathode layer is formed by an electrically conductive resin layer. An additional advantage of the increased ability to prevent the penetration of the oxygen molecules arises, compared with the case where the cathode layer is formed by 100% of a metal such as a solder. The reason is that the adhesion strength for the resin-to-resin contact is greater than that for the resin-to-metal contact and as a result, a gap is difficult to be generated at the interface of the electrically conductive resin layer and the cathode layer.

The electrically conductive resin layer is preferably formed by using an electrically conductive paste produced by mixing an electrically conductive particles (for example, graphite or silver particles) with a resin binder (for example, epoxy resin) The resin layer may be formed by a dispensing, coating or dipping process.

In still another preferred embodiment of the capacitor, the cathode layer has a multi-level structure containing a first sublayer and a second sublayer, and the electrically insulating resin layer is sandwiched between the first and second sublayers. A first overlap portion is formed by the first sublayer and the electrically insulating resin layer. A second overlap portion is formed by the second sublayer and the electrically insulating resin layer.

An additional advantage that the ability to protect the penetration of oxygen molecules is further increased arises.

The reason is that the adhering surface area between the electrically insulating resin layer and the first and second sublayers of the cathode layer is doubled, and that the resin layer is forcibly pressed by the two sublayers, thereby increasing the adhesion strength between the resin layer and the cathode layer.

It is preferred that the height or width of each of the first and second overlap portions is equal to or greater than 0.1 mm. If the height or width of the first and second overlap portions is less than 0.1 mm, a wanted capacitance value cannot be obtained while obtaining the effect of preventing the ESR increase.

It is preferred that the surface area of each of the first and second overlapped portions is equal to or less than 25% of the entire surface area of the anode body excepting the anode lead. If the surface area of the first and second overlap portions is greater than 25% of the entire surface area of the anode body excepting the anode lead, a wanted capacitance value cannot be obtained while obtaining the effect of preventing the ESR increase.

According to a second aspect of the present invention, a fabrication method of the solid electrolytic capacitor according to the first aspect is provided. This method includes the following steps:

An anode body having an anode lead implanted onto its top face is prepared and then, a dielectric layer is formed on the surface of the anode body. A solid electrolyte layer made of an electrically conductive polymer compound is formed on the dielectric layer. An electrically insulating resin layer is formed on the solid electrolytic layer to cover an area of the solid electrolyte layer which is located in the neighborhood of the bottom of the anode lead. A cathode layer is formed on the electrically insulating resin layer and the exposed solid electrolytic layer.

The cathode layer maybe formed to be located on or beneath the electrically insulating resin layer.

According to a third aspect of the present invention, another fabrication method of the solid electrolytic capacitor according to the first aspect is provided. This method includes the following steps:

An anode body having an anode lead implanted onto its top face is prepared and then, a dielectric layer is formed on the surface of the anode body. A solid electrolyte layer made of an electrically conductive polymer compound is formed on the dielectric layer. These steps are the same as those of the method according to the third aspect.

Then, a first electrically conductive sublayer forming a part of a cathode layer is formed on the solid electrolytic layer so that an exposed area of the solid electrolytic layer is formed in the neighborhood of the bottom or the anode lead.

An electrically insulating resin layer is formed to cover the exposed area of the solid electrolytic layer. The bottom end of the electrically insulating resin layer is overlapped with the first electrically conductive sublayer.

A second electrically conductive sublayer forming another part of the cathode layer is formed on the exposed first electrically conductive resin layer to be partially overlapped with the electrically insulating resin layer.

A first overlap portion is formed by the first sublayer and the electrically insulating resin layer. A second overlap portion is formed by the second sublayer and the electrically insulating resin layer.

## BRIEF DESCRIPTION OF THE DRAWINGS

Fig.1 is a cross-sectional view of a capacitor element or a conventional solid electrolytic capacitor.

Fig.2 is a partially-cutaway, schematic, perspective view of a solid electrolytic capacitor according to a first embodiment of the present invention.

Fig.3 is a cross-sectional view of a capacitor element of the solid electrolytic capacitor according to the first embodiment of Fig. 2.

Figs.4A to 4F are cross-sectional views of the capacitor element of the solid electrolytic capacitor according to the first embodiment of Figs. 2 and 3, which show the fabrication process steps of the capacitor, respectively.

Fig.5 is a cross-sectional view of a capacitor element of a solid electrolytic capacitor according to a second embodiment of the present invention.

Figs.6A to 6D are cross-sectional views of the capacitor element of the solid electrolytic capacitor according to the second embodiment of Fig. 5, which show the fabrication process steps of the capacitor, respectively.

Fig.7 is a cross-sectional view of a capacitor element of a solid electrolytic capacitor according to a third embodiment of the present invention.

Figs.8A and 8B are cross-sectional views of the capacitor element of the solid electrolytic capacitor according to the third embodiment of Fig. 7, which show the fabrication process steps of the capacitor, respectively.

## DETAILED DESCRIPTION OF THE PREFERRED EMBODIMENTS

Preferred embodiments of the present invention will be described below by referring to the drawings attached.

## FIRST EMBODIMENT

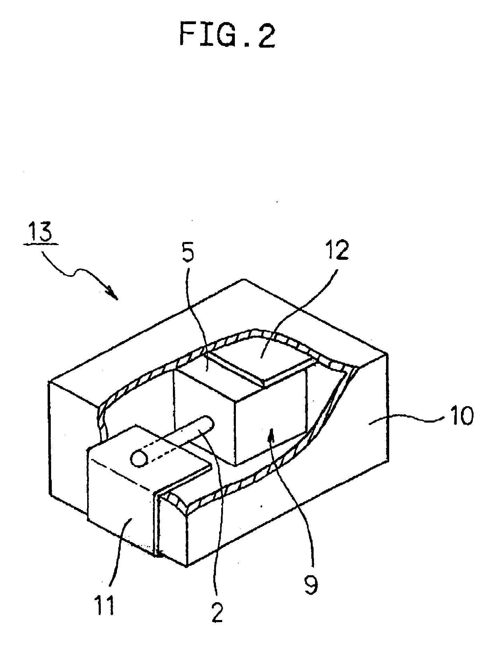

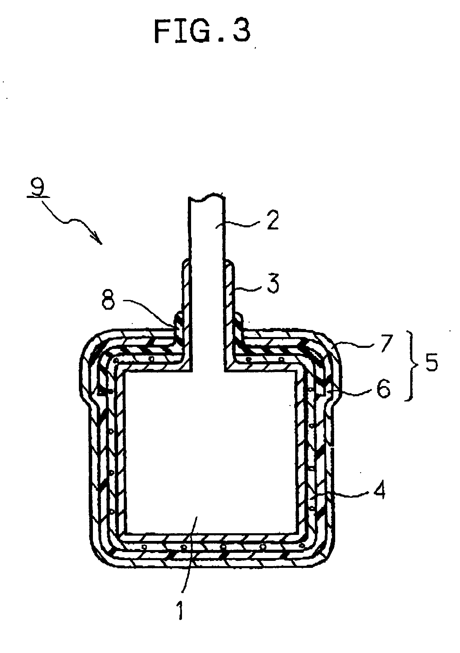

Figs.2 and 3 show a tantalum solid-electrolytic capacitor according to a first embodiment of the invention.

As shown in Fig. 3, a capacitor element 9 is comprised of an anode body 1 made of tantalum, and an anode lead 2 made of a piece of a tantalum wire. The anode body 1 has a cubic shape whose length, width and height are 1 mm and an enlarged surface area. The anode lead 2 is implanted onto the top face of the anode body 1 to extend along one axis of the body 1.

It is needless to say that any other metal having a valve action than tantalum (for example, aluminum, titanium or the like) may be used as the material for the anode body 1.

The capacitor element 9 further includes a dielectric layer 3 made of tantalum oxide, a solid electrolyte layer 4 made of a polypyrrole, and a cathode layer 5 with a two-level-structure made of a graphite sublayer 6 and a silver sublayer 7.

Any one of the electrically-conductive polymer compounds other than polypyrrole (for example, polythiophene, polyaniline or the like) may be employed for the solid electrolyte layer 4.

The dielectric layer 3 is formed on the surface of the anode body 1 to cover the bottom, side and top faces of the body 1. The layer 3 covers the surface of the bottom part of the anode lead 2 also.

The solid electrolyte layer 4 is formed on the dielectric layer 3 to cover the bottom, side and top faces of the anode body 1. The layer 4 does not cover the anode wire 2.

An electrically insulating resin layer 8 is formed on the solid electrolyte layer 4 in the vicinity of the bottom of the anode lead 2, as shown in Fig. 3. The resin layer 8 is contacted with the solid electrolyte layer 4 over the top and side faces of the anode body 1. The layer 8 is contacted with the exposed dielectric layer 3 from the solid electrolyte layer 4 near the bottom of the anode lead 2. The resin layer 8 covers the entire top face of the anode body 1, an upper part or the side face of the body 1, and the bottom of the anode lead 2. The entire bottom face and almost all the side face of the solid electrolyte layer 4 are exposed from the resin layer 8.

Here, the electrically insulating resin layer 8 is made of an epoxy resin, which has a function of preventing the oxygen molecules existing in the atmosphere from entering the underlying solid electrolyte layer 4.

The graphite sublayer 6 forming the inner part of the cathode layer 5 is formed on the electrically insulating resin layer 8 and the exposed solid electrolyte layer 4 from the layer 8. The sublayer 6 covers the bottom, side and top faces of the anode body 1.

The silver sublayer 7 forming the outer part of the cathode layer 5 is formed on the graphite sublayer 6 to cover the bottom, side and top faces of the anode body 1. In other words, the silver sublayer 107 is formed to be completely overlapped with the underlying graphite sublayer 6.

The sublayers 6 and 7 (i.e., the cathode layer 5) are not contacted with the dielectric layer 3, because the electrically insulating resin layer 8 exists between the bottom part of the anode lead 2 and the sublayers 6 and 7.

As shown in Fig. 2, an external anode terminal 11 is fixed onto the top of the anode lead 2 and an external cathode terminal 12 is fixed onto the surface of the cathode layer 5.

The capacitor element 9 is encapsulated by a molding epoxy resin, thereby forming an approximately parallelepiped package 10. The bottom of the external anode and cathode terminals 11 and 12 are buried in the package 10, and the remaining external anode and cathode terminals 11 and 12 are projected from the package 10.

The solid electrolyte capacitor according to the first embodiment shown in Figs. 2 and 3 is fabricated in the following way.

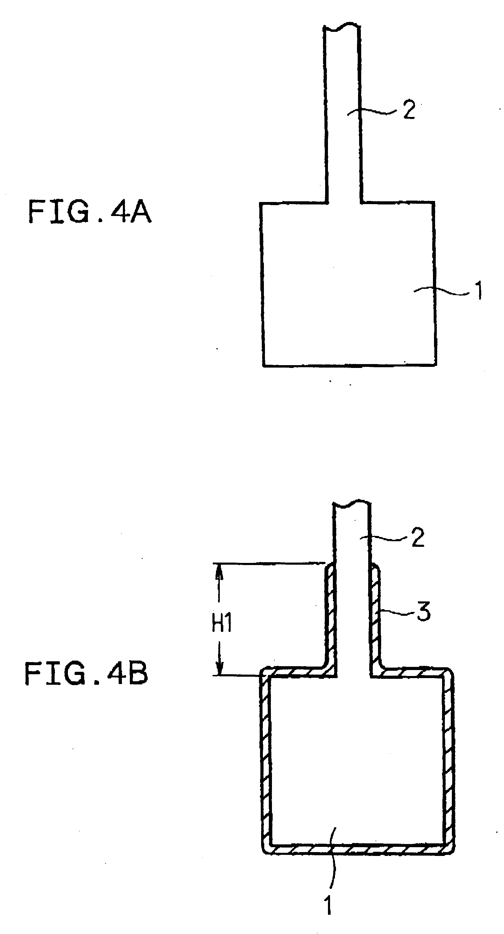

First, a powder of tantalum is pressed to have a specific cubic shape. During this pressing process, a tantalum wire serving as the anode lead 2 is implanted onto the top face of the shaped powder to extend along one axis of the cubic shape. The shaped powder is then sintered, resulting in the surface-enlarged anode body 1 made of tantalum as shown in Fig. 4A. This body 1 has a cubic shape whose length, width and height each is 1 mm.

Next, the tantalum anode body 1 thus obtained is immersed into an aqueous solution of phosphoric acid of 0.01 wt% until the level of 1 mm higher than the top face of the anode body 1 is equal to the surface of this solution. In other words, the body 1 is immersed into the phosphoric acid solution until the height H1 from the root or bottom of the tantalum lead 2 is equal to 1 mm. Then, a dc voltage of 35 V is applied to the body 1.

Thus, a tantalum oxide layer serving as the dielectric layer 3 is generated due to anodic oxidation of the body 1. The top of the tantalum oxide layer is located at the position where the height H1 is 1 mm, which is measured from the top face of the body 1 or the root of the anode lead 2 toward the top end of the dielectric layer 3, as shown in Fig. 4B.

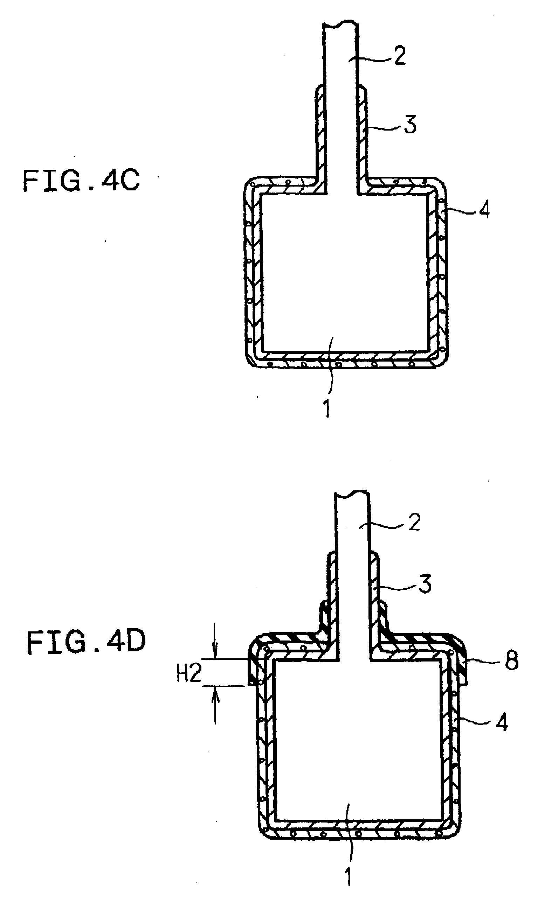

Thereafter, a polypyrrole layer serving as the solid electrolyte layer 4 is formed on the dielectric layer 3, as shown in Fig. 4C. The polypyrrole layer 4 is formed by a known process such as an electrolytically oxidative polymerization, a chemically oxidative polymerization, or the combination of electrolytically oxidative polymerization and chemically oxidative polymerization processes.

The solid electrolyte layer 4 covers the bottom, side and top faces of the anode body 1. The layer 4 does not cover the anode wire 2.

Next, an epoxy resin as one of the electrically insulating resins is coated on the polypyrrole layer 4 in the vicinity of the bottom of the anode lead 2, as shown in Fig. 4D. The coated epoxy resin is then heat-treated and cured in a nitrogen atmosphere at 150 °C for 60 minutes, thereby obtaining the protective resin layer 8. The layer 8 is contacted with the solid electrolyte layer 4 over the top and side faces of the anode body 1 and with the exposed dielectric layer 3 from the solid electrolyte layer 4 near the bottom of the anode lead 2.

Here, as shown in Fig. 4D, the protective resin layer 8 is formed so as to cover the entire top face of the anode body 1 where the anode lead 2 is implanted and an upper part of the side face of the body 1 joined to the top face. The layer 8 covers the exposed dielectric layer 3 around the anode lead 2 also.

The height H2 of the epoxy resin layer 8 from the top face of the body 1 is 0.2 mm. The surface area of the overlapped portion of the polypyrrole layer 4 with the epoxy resin layer 8 located over the top and side faces of the anode body 1 is equal to approximately 13% of the entire surface area of the anode body 1 excepting the anode lead 2.

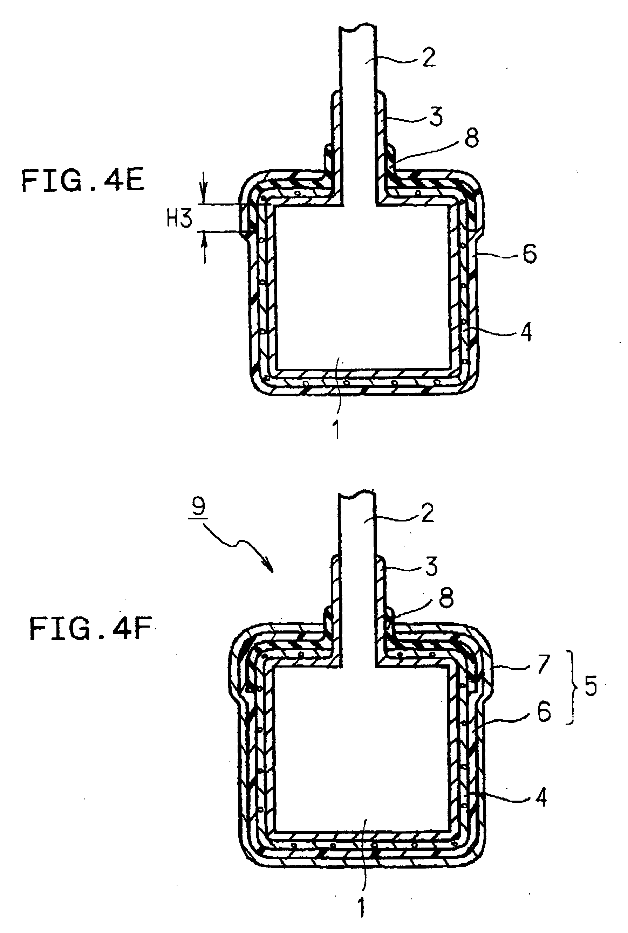

Then, as shown in Fig. 4E, a graphite paste, which is obtained by mixing graphite particles with a liquid resin, is coated on the exposed surfaces of the polypyrrole layer 4 and the epoxy resin layer 8 not to be contacted with the anode lead 2. The coated graphite paste is heat-treated and cured in a nitrogen atmosphere at 150 °C for 60 minutes, thereby forming the graphite sublayer 6 of the cathode layer 5.

The height H3 indicates the height or width of the overlap portion of the epoxy resin layer 8 and the graphite sublayer 6. Here, $H3 = H2 = 0.2$ mm , and therefore, the surface area of the overlapped portion of the polypyrrole layer 4 with the epoxy resin layer 8, which is located over the side face of the anode body 1, is equal to approximately 13% of the entire surface area of the anode body 1 excepting the anode lead 2.

Next, as shown in Fig. 4F, a silver paste, which is obtained by mixing silver particles with a liquid resin, is coated on the capacitor element 9 so as to be completely overlapped with the underlying graphite sublayer 6. The coated silver paste is heat-treated and cured in a nitrogen atmosphere at 150 °C for 60 minutes, thereby forming the silver sublayer 7 of the cathode layer 5.

Thus, the capacitor according to the first embodiment shown in Fig. 3 is obtained.

With the solid electrolytic capacitor according to the first embodiment, the electrically insulating resin layer (i.e., the epoxy resin layer) 8 having a function of preventing the oxygen molecules existing in the atmosphere from entering the solid electrolyte layer (the polypyrrole layer) 4 is formed to cover the exposed area of the layer 4. Therefore, the oxygen molecules in the atmosphere are prevented from entering the polypyrrole layer 4 by the epoxy resin layer 8.

As a result, the oxidation of the electrically conductive polymer compound layer can be prevented. This means that the time-dependent ESR increase with time is suppressed even when the capacitor is operated at a high temperature circumstance.

SECOND EMBODIMENT

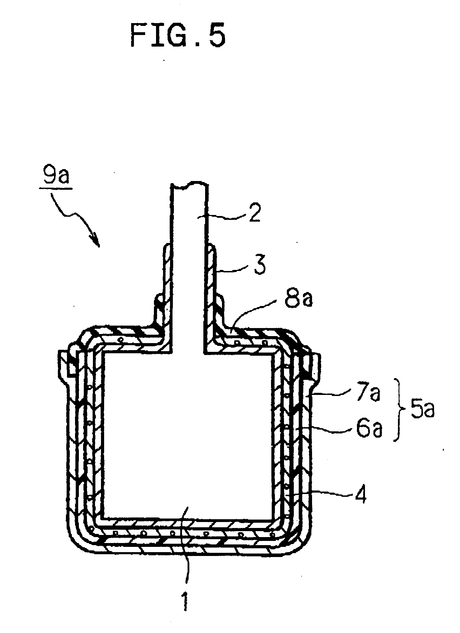

Fig.5 shows a tantalum solid-electrolytic capacitor according to a second embodiment of the invention.

The second embodiment has the same configuration as that of the first embodiment other than that a cathode layer 5a does not cover the entire top face of the anode body 1 and covers only the bottom and side faces of the body 1. Therefore, the description relating to the same configuration is omitted here by adding the same reference numerals to the corresponding element for the sake of simplification of description.

As shown in Fig. 5, a capacitor element 9a includes a cathode layer 5a with a two-level structure of a graphite sublayer 6a and a silver sublayer 7a.

An electrically insulating resin layer 8a is formed on the solid electrolyte layer 4 in the vicinity of the bottom of the anode lead 2, as shown in Fig. 5. The resin layer 8a is contacted with the solid electrolyte layer 4 over the top and side faces of the anode body 1. The layer 8a is contacted with the exposed dielectric layer 3 from the solid electrolyte layer 4 near the bottom of the anode lead 2. The resin layer 8a covers the entire top face of the anode body 1, an upper part of the side face of the body 1, and the bottom of the anode lead 2. The entire bottom face and almost all the side face of the solid electrolyte layer 4 are exposed from the resin layer 8a.

Here, the electrically insulating resin layer 8a is made of an epoxy resin.

The graphite sublayer 6a forming the inner part of the cathode layer 5a is formed on the exposed solid electrolyte layer 4. The sublayer 6a covers the bottom and side faces or the anode body 1. Unlike the first embodiment, the sublayer 6a does not extend to the top face of the body 1.

The silver sublayer 7a forming the outer part of the cathode layer 5a is formed on the graphite sublayer 6a to cover the bottom and side faces of the anode body 1. In other words, the silver sublayer 7a is completely overlapped with the underlying graphite sublayer 6a.

The sublayers 6a and 7a (i.e., the cathode layer 5a) are not contacted with the dielectric layer 3.

The solid electrolyte capacitor according to the second embodiment shown in Fig. 5 is fabricated in the following way.

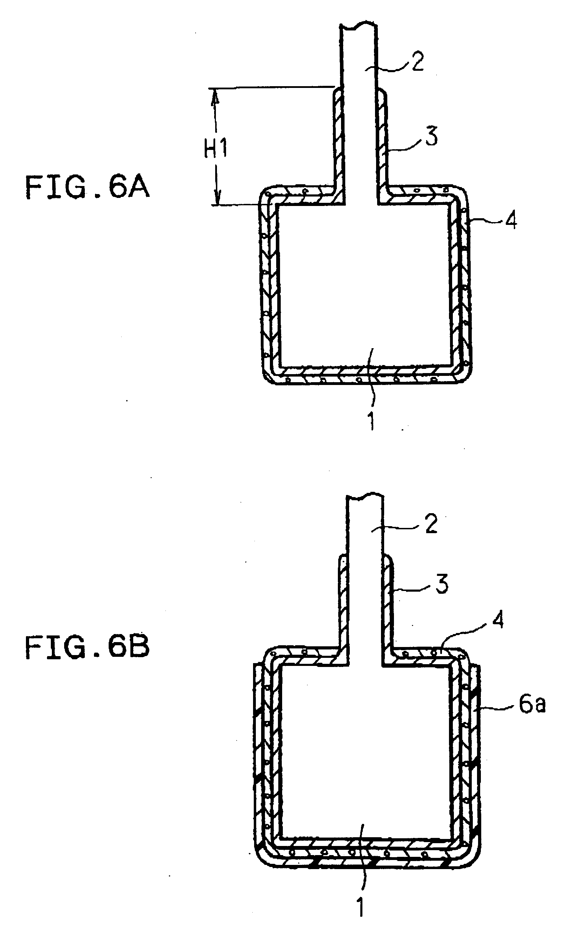

First, in the same way as that of the first embodiment, the anode body 1 with the anode lead 2, the dielectric layer 3, and the polypyrrole layer 4 are prepared, as shown in Fig. 6A.

Then, the same graphite paste as used in the first embodiment is coated over the bottom and side faces of the anode body 1. The coated graphite paste is subjected to the same heat treatment and curing processes as those in the first embodiment, thereby forming the graphite sublayer 6a, as shown in Fig. 6B.

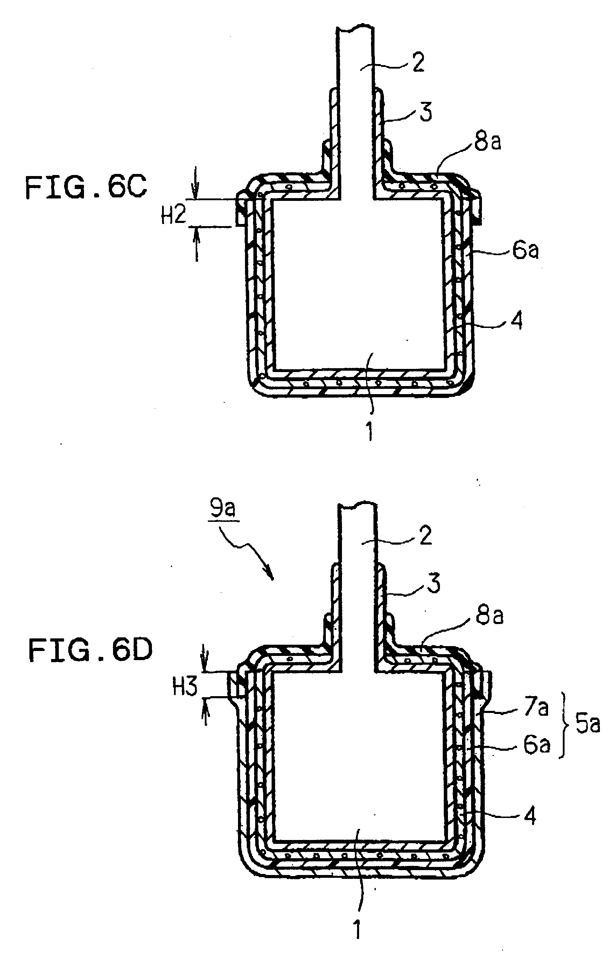

Next, an epoxy resin is coated on the exposed polypyrrole layer 4 in the vicinity of the bottom of the anode lead 2, as shown in Fig. 6C. The coated epoxy resin is then subjected to the same heat-treatment and curing processes as those in the first embodiment, thereby forming the protective resin layer 8a. The layer 8a is contacted with the exposed solid electrolyte layer 4 over the top and side faces of the anode body 1 and with the exposed dielectric layer 3 from the solid electrolyte layer 4 near the bottom of the anode lead 2.

Here, as shown in Fig. 6C, the protective resin layer 8a is formed so as to cover the entire top face of the anode body 1 where the anode lead 2 is implanted and an upper part of the side face of the body 1 joined to the top face. The layer 8a covers the exposed dielectric layer 3 around the anode lead 2 also.

The height H2 of the overlapped portion of the epoxy resin layer 8a with the graphite sublayer 6a is 0.2 mm, which is equal to that of the first embodiment. The surface area of the overlapped portion of the layer 8a with the sublayer 6a 1 is equal to approximately 13% of the entire surface area of the anode body 1 excepting the anode lead 2, which is equal to that of the first embodiment.

Subsequently, as shown in Fig. 6D, the same silver paste as used in the first embodiment is coated on the capacitor element 9a so as to be completely overlapped with the underlying graphite sublayer 6a. The coated silver paste is then subjected to the same heat-treatment and curing processes as those in the first embodiment, thereby forming the silver sublayer 7a.

The height H3 of the overlapped portion of the epoxy resin layer 8a with the silver sublayer 7a is also 0.2 mm. The surface area of the overlapped portion of the layer 8a with the sublayer 7a 1 is also equal to approximately 13% of the entire surface area of the anode body 1 excepting the anode lead 2.

With the solid electrolytic capacitor according to the second embodiment, the electrically insulating resin (i.e., epoxy resin) layer 8a is formed to cover the exposed area of the electrically conductive polymer compound layer 4. Therefore, the oxygen molecules in the atmosphere are prevented from entering the electrically conductive polymer compound layer 4 by the insulating resin layer 8a.

As a result, the oxidation of the electrically conductive polymer compound layer 4 can be prevented. This means that the time-dependent ESR increase with time is suppressed even when the capacitor is operated at a high temperature circumstance.

THIRD EMBODIMENT

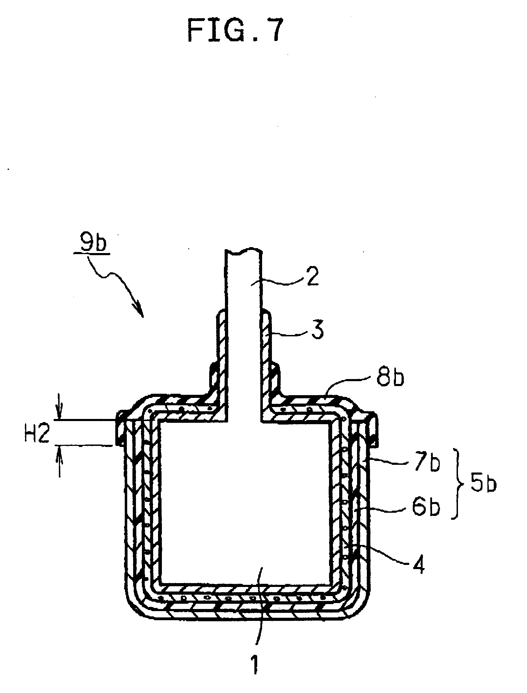

Fig.7 shows a tantalum solid-electrolytic capacitor according to a third embodiment of the invention.

The third embodiment has the same configuration as that of the first embodiment other than that a cathode layer 5b does not cover the entire top face of the anode body 1 and covers only the bottom and side faces of the body 1, and that the bottom end part of an electrically insulating resin layer 8b covers the top portion of the cathode layer 5b. Therefore, the description relating to the same configuration is omitted here by adding the same reference numerals to the corresponding element for the sake of simplification of description.

As shown in Fig. 7, a capacitor element 9b includes a cathode layer 5b with a two-level structure of a graphite sublayer 6b and a silver sublayer 7b.

An electrically insulating resin layer 8b is formed on the solid electrolyte layer 4 in the vicinity of the bottom of the anode lead 2, as shown in Fig. 7. The resin layer 8b is contacted with the solid electrolyte layer 4 over the top and side faces of the anode body 1. The layer 8b is contacted with the exposed dielectric layer 3 from the solid electrolyte layer 4 near the bottom of the anode lead 2. The layer 8b covers the entire top face of the anode body 1, the upper end of the side face of the body 1, and the bottom of the anode lead 2. The entire bottom face and almost all the side face of the solid electrolyte layer 4 are exposed from the resin layer 8b.

Here, the electrically insulating resin layer 8b is made of an epoxy resin.

The graphite sublayer 6b forming the inner part of the cathode layer 5b is formed on the exposed solid electrolyte layer 4. The sublayer 6b covers the bottom and side faces of the anode body 1. Unlike the first embodiment, the sublayer 6b does not cover the top face of the body 1.

The silver sublayer 7b forming the outer part of the cathode layer 5b is formed on the graphite sublayer 6b to cover the bottom and side faces of the anode body 1. In other words, the silver sublayer 7b is completely overlapped with the underlying graphite sublayer 6b.

The sublayers 6b and 7b (i.e., the cathode layer 5b) are not contacted with the dielectric layer 3.

The solid electrolyte capacitor according to the third embodiment shown in Fig. 7 is fabricated in the following way.

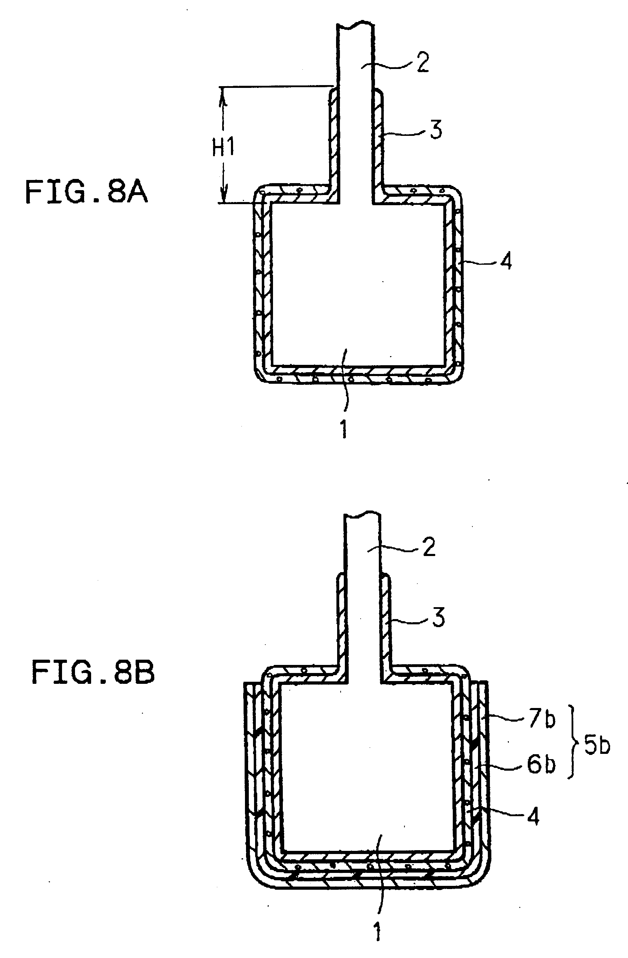

First, in the same way as that of the first embodiment, the anode body 1 with the anode lead 2, the dielectric layer 3, and the polypyrrole layer 4 are prepared, as shown in Fig. 8A.

Then, the same graphite paste as used in the first embodiment is coated on the bottom and side faces of the anode body 1. The coated graphite paste is subjected to the same heat treatment and curing processes as those in the first embodiment, thereby forming the graphite layer 6b, as shown in Fig. 8B.

Subsequently, as shown in Fig. 8B, the same silver paste as used in the first embodiment is coated on the capacitor element 9b so as to be completely overlapped with the underlying graphite sublayer 6b. The coated silver paste is then subjected to the same heat-treatment and curing processes as those in the first embodiment, thereby forming the silver sublayer 7b.

Next, an epoxy resin is coated on the polypyrrole layer 4 in the vicinity of the bottom of the anode lead 2, as shown in Fig. 7. The coated epoxy resin is then subjected to the same heat-treatment and curing processes as those in the first embodiment, thereby forming the protective resin layer 8b. The layer 8b is contacted with the solid electrolyte layer 4 over the top and side faces of the anode body 1 and with the exposed dielectric layer 3 from the solid electrolyte layer 4 near the bottom of the anode lead 2.

Here, as shown in Fig.7, the protective resin layer 8b is formed so as to cover the entire top face of the anode body 1 where the anode lead 2 is implanted and an upper part of the side face of the body 1 joined to the top face. The layer 8b covers the exposed dielectric layer 3 around the anode lead 2 also.

The height H2 of the overlapped portion of the epoxy resin layer 8b with the silver sublayer 7b is 0.2 mm, which is equal to that of the first embodiment. The surface area of the overlapped portion of the layers 8b and 7b is equal to approximately 13% of the entire surface area of the anode body 1 excepting the anode lead 2, which is equal to that of the first embodiment.

With the solid electrolytic capacitor according to the third embodiment, the electrically insulating resin (i.e., epoxy resin) layer 8b is formed to cover the exposed area of the electrically conductive polymer compound layer 4. Therefore, the oxygen molecules in the atmosphere are prevented from entering the electrically conductive polymer compound layer 4 by the insulating resin layer 8b.

As a result, the same advantage as that of the first embodiment is obtained.

CONFIRMATION TEST

To confirm the advantage or affect of the present invention, a confirmation test was performed by the inventors under the following condition:

As test specimens, the capacitor elements 9, 9a and 9b of the capacitors according to the first, second and third embodiments were fabricated. Also, the conventional capacitor element 109 shown in Fig. 1 was fabricated as a specimen for comparisons in which the graphite sublayer 106 of the cathode layer 105 was formed by the following way:

The anode body 101 having already formed the polypyrrole layer 104 was immersed into a liquid suspension and then, was heated and dried. The liquid suspension was obtained by suspending graphite particles into water by means of agitation.

These specimens were kept in an isothermal bath whose temperature is 105 °C and then, the change of the ESR value was observed with time at a frequency of 100 kHz. The test of the ESR change at 100 kHz was adopted in this observation because it is suitable to evaluate the electric conductivity of the electrically conductive polymer compound.

The result of this test is shown in Table 1.

Table 1

| Test specimen | | ESR(100kHz) | | | |
|---|---|---|---|---|---|
| | | Initial value | After 250 hours | After 500 hours | After 1000 hours |
| Embodiment No. | 1 | 228mΩ | 245mΩ | 269mΩ | 325mΩ |
| | 2 | 234mΩ | 256mΩ | 272mΩ | 342mΩ |
| | 3 | 221mΩ | 281mΩ | 321mΩ | 488mΩ |
| Comparing Example | | 215mΩ | 385mΩ | 625mΩ | 1221mΩ |

Comparing the capacitor element 9b according to the third embodiment with the conventional capacitor element 109, it is found that the ESR value of the capacitor element 9b of the third embodiment after 1000 hours is increased up to 2.21 times its initial value, and that the ESR value of the conventional capacitor element 109 is increased up to 5.68 times its initial value. From this fact, it can be seen that the increase of the ESR value is largely suppressed by covering the exposed part of the polypyrrole layer 4 from the graphite layer 6b with the protective resin layer 8c.

It is considered that this ESR value difference is due to the following reasons:

(1) The protective resin layer 8b used in the third embodiment is made of a resin, which is inherently impermeable to oxygen.
(2) The graphite layer 106 used in the conventional capacitor element is produced by the use of a suspension and therefore, the layer 106 is not dense in structure but permeable to oxygen. On the other hand, the graphite layer 6b used in the third embodiment contains a resin which is low in permeability to oxygen.
(3) Both of the protective resin layer 8b and the graphite sublayer 6b in the third embodiment contain the resins and as a result, the adhesion between the layer 8b and the sublayer 6b is extremely well. This means that their contact surfaces are high protective to peeling, which is difficult to generate a gap therebetween.

Referring to the test results of the first and second embodiments, the ESR values after 1000 hours are increased up to 1.41 and 1.47 times their initial value, respectively, which is lower than that of the third embodiment.

Comparing the first and second embodiments with the third embodiment, it is seen that each of the protective resin layers 8 and 8a according to the first and second embodiments is sandwiched between the two adjacent layers. Therefore, it is seen that the ESR value in the first and second embodiments is more effectively increased than the third embodiment where the insulating resin layer 8b is placed at the outermost position.

It is considered that this is due to the following facts:

In the first and second embodiments, the adhering surface area between the electrically insulating resin layer 8 or 8a and the inner and outer sublayers of the cathode layer 5 or 5a (i.e., the penetrating or entering path of the oxygen molecules between the adjacent two layers) is doubled, and the resin layer 8 or 8a is forcibly pressed by the two adjacent layers. Thus, the adhesion strength between the resin layer 8 or 8a and the cathode layer 5 or 5a is increased.

While the preferred forms of the present invention have been described, it is to be understood that modifications will be apparent to those skilled in the art without departing from the spirit of the invention. The scope of the invention, therefore, is to be determined solely by the following claims.

## Claims

1. A solid electrolytic capacitor comprising:

    an anode body made of a metal having a valve action;
    an anode lead implanted onto the top face of said anode body;
    a dielectric layer made of an oxide of said metal and formed on said anode body;
    a solid electrolyte layer made of an electrically conductive polymer compound and formed on said dielectric layer;
    said solid electrolyte layer having a non-contacted area with said cathode layer near the bottom of said anode lead;
    an electrically insulating resin layer having a function of preventing oxygen molecules existing in the atmosphere from entering said solid electrolyte layer;
    said non-contacted area of said solid electrolyte layer being covered with said electrically insulating resin layer; and
    a cathode layer formed on said solid electrolyte layer;

2. The capacitor as claimed in claim 1, wherein said electrically insulating resin layer is formed to be overlapped with said cathode layer.

3. The capacitor as claimed in claim 1, wherein said cathode layer is formed to extend toward said anode lead to cover said electrically insulating resin layer over the top and side faces of said anode body.

4. The capacitor as claimed in claim 1, wherein said cathode layer is formed to extend toward said anode lead to cover said electrically insulating resin layer over the side face of said anode body.

5. The capacitor as claimed in claim 1, wherein said electrically insulating resin layer is formed to cover the top part of said cathode layer.

6. The capacitor as claimed in clam 1, wherein the height of an overlap portion of said electrically insulating resin layer and said cathode layer is equal to or greater than 0.1 mm.

7. The capacitor as claimed in claim 1, wherein the surface area of an overlapped portion of said electrically insulating resin layer and said cathode layer is equal to or less than 25% of the entire surface area of said anode body excepting said anode lead.

8. The capacitor as claimed in claim 1, wherein said cathode layer is formed by an electrically conductive resin layer.

9. The capacitor as claimed in claim 8, wherein said cathode layer is formed by an electrically conductive resin layer.

10. The capacitor as claimed in claim 1, wherein said electrically conductive resin layer is formed by using an electrically conductive paste.

11. The capacitor as claimed in claim 1, wherein said cathode layer has a multi-level structure containing a first sublayer and a second sublayer;

    and wherein said electrically insulating resin layer is sandwiched between said first and second sublayers;
    and wherein a first overlap portion is formed by said first sublayer and said electrically insulating resin layer;
    and wherein a second overlap portion is formed by said second sublayer and said electrically insulating resin layer.

12. The capacitor as claimed in claim 11, wherein the height of said first and second overlapped portions is equal to or greater than 0.1 mm.

13. The capacitor as claimed in claim 11, wherein the surface area of said first and second overlapped portions is equal to or loss than 25% of the entire surface area of said anode body excepting said anode lead.

14. A fabrication method of a solid electrolytic capacitor, comprising the steps of:

preparing an anode body having an anode lead implanted onto its top face;
forming a dielectric layer on the surface of said anode body;
forming a solid electrolyte layer made of an electrically conductive polymer compound on said dielectric layer;
forming an electrically insulating resin layer on said solid electrolytic layer to cover an area of said solid electrolyte layer which is located in the neighborhood of the bottom of said anode lead; and
forming a cathode layer on said electrically insulating resin layer and said exposed solid electrolytic layer.

15. The method as claimed in claim 14, wherein said cathode layer is formed to be located on said electrically insulating resin layer.

16. The method as claimed in claim 14, wherein said cathode layer is formed to be located beneath said electrically insulating resin layer.

17. A fabrication method of a solid electrolytic capacitor, comprising the steps of:

preparing an anode body having an anode lead implanted onto its top face;
forming a dielectric layer on the surface of said anode body;
forming a solid electrolyte layer made of an electrically conductive polymer compound on said dielectric layer;
forming a first electrically conductive sublayer constituting a part of a cathode layer on said solid electrolytic layer so that an exposed area of said solid electrolytic layer is formed in the neighborhood of the bottom of said anode lead over the top face of said anode body;
forming an electrically insulating resin layer to cover the exposed area of said solid electrolytic layer, the bottom and of said electrically insulating resin layer being overlapped with said first electrically conductive sublayer; and
forming a second electrically conductive sublayer constituting another part of said cathode layer on said exposed first electrically conductive resin layer to be partially overlapped with said electrically insulating resin layer;
wherein a first overlap portion is formed by said first sublayer and said electrically insulating resin layer, and a second overlap portion is formed by said second sublayer and said electrically insulating resin layer.

# FIG.1
## PRIOR ART

# FIG.2

# FIG.3

FIG.4A

FIG.4B

FIG.4C

FIG.4D

FIG.4E

FIG.4F

## FIG.5

FIG.6A

FIG.6B

FIG.6C

H2

8a

6a

4

2

3

1

FIG.6D

9a

H3

8a

7a

6a

5a

4

2

3

1

# FIG.7

FIG.8A

FIG.8B